# EUROPÄISCHE PATENTSCHRIFT

(11) **EP 2 977 357 B1**
(45) Veröffentlichungstag und Bekanntmachung des Hinweises auf die Patenterteilung: **28.08.2019**
(21) Anmeldenummer: 15175574.1
(22) Anmeldetag: 07.07.2015
(51) Int. Cl.: C02F 11/125, C02F 11/12, B01D 29/35, B01D 29/64, B30B 9/18, B30B 9/12, B30B 9/26, B01D 29/60, B01D 29/48, B01D 25/32, B01D 29/31, B01D 46/00, B01D 46/44

(54) **LÄNGLICHES ABSTREIFERPROFIL FÜR ENTWÄSSERUNGSVORRICHTUNG UND ENTWÄSSERUNGSVORRICHTUNG MIT ABSTREIFERPROFIL**
ELONGATED SCRAPER PROFILE FOR DEWATERING APPARATUS AND DEWATERING APPARATUS COMPRISING THE PROFILE
PROFILE RACLOIR LONGITUDINAL POUR APPAREIL DE DESHYDRATATION ET APPAREIL DE DESHYDRATATION COMPRENANT LEDIT RACLOIR

(30) Priorität: 24.07.2014 DE 102014110471
(43) Veröffentlichungstag der Anmeldung: 27.01.2016
(73) Patentinhaber: Huber SE, 92334 Berching (DE)
(72) Erfinder: Bechtl, Karl-Heinz, 90530 Wendelstein (DE)
(74) Vertreter: Baudler, Ron

(56) Entgegenhaltungen:
- WO-A1-2011/092819
- DE-A1- 3 720 122
- DE-A1- 4 001 121
- DE-B3-102012 022 189
- DE-U1- 29 510 210
- DE-U1-202012 100 753
- FR-A1- 2 763 054
- GB-A- 708 177
- US-A- 5 280 890
- US-A1- 2005 247 544
- US-A1- 2011 220 586

## Beschreibung

Die vorliegende Erfindung betrifft ein längliches Abstreiferprofil, geeignet für eine Entwässerungsvorrichtung, die dem Entwässern von Schlamm dient, wobei das Abstreiferprofil einen sich in Richtung der Längsausdehnung des Abstreiferprofils erstreckenden Lippenabschnitt aufweist, der beispielsweise in einem in die Entwässerungsvorrichtung eingebautem Zustand dem Abstreifen von Schlammbestandteilen von einer Siebfläche dient, und wobei das Abstreiferprofil einen sich in Richtung der genannten Längsausdehnung erstreckenden Befestigungsabschnitt aufweist, der der Fixierung des Abstreiferprofils mit Hilfe einer Halteanordnung, beispielsweise in der genannten Entwässerungsvorrichtung, dient.

Darüber hinaus wird eine Entwässerungsvorrichtung zum Entwässern von Schlamm beschrieben, wobei die Entwässerungsvorrichtung wenigstens eine Einlassöffnung für den Schlamm aufweist, wobei die Entwässerungsvorrichtung eine Pressanordnung aufweist, mit deren Hilfe der Schlamm nach Passieren der Einlassöffnung einem Pressvorgang unterziehbar ist, bei dem in dem Schlamm vorhandene Flüssigkeit aus dem Schlamm ausgetrieben wird, wobei die Pressanordnung eine mit Hilfe eines Antriebs in eine Drehbewegung versetzbare Schneckenwelle und eine die Schneckenwelle zumindest abschnittsweise umgebende Siebfläche umfasst, wobei die Schneckenwelle in ihrem der Siebfläche zugewandten Außenbereich wenigstens ein Abstreiferprofil besitzt, über das die Schneckenwelle an der Siebfläche anliegt, wobei die Entwässerungsvorrichtung zumindest eine Auslassöffnung für die aus dem Schlamm ausgetriebene Flüssigkeit aufweist, und wobei die Entwässerungsvorrichtung wenigstens eine Austrittsöffnung für den mit Hilfe der Entwässerungsvorrichtung zumindest teilweise entwässerten Schlamm aufweist.

Gattungsgemäße Abstreiferprofile kommen z. B. in Anlagen zum Einsatz, bei denen eine wässrige Substanz, beispielsweise (teilentwässerter) Schlamm, mit Hilfe von Schaberelementen entlang einer Siebfläche geführt wird, über die noch vorhandene Flüssigkeit aus der Substanz ausgetrieben werden soll. Die Abstreiferprofile sind hierbei an den Schaberelementen befestigt und bilden den Übergang zur Siebfläche. Werden die Schaberelemente entlang der Siebfläche bewegt, so stellen die Abstreiferprofile sicher, dass die zu entwässernde Substanz an der Siebfläche vorbeigeführt wird und hierbei stets mit neuen Bereichen der Siebfläche in Kontakt kommt. Die Abstreiferprofile besitzen hierfür in der Regel die genannte längliche Ausdehnung, d. h. ihre Länge besitzt ein Vielfaches ihrer Breite bzw. Höhe.

Hierdurch ist es unter anderem auch möglich, die Abstreiferprofile umfangsmäßig in einer umlaufenden Nut einer Schneckenwelle zu befestigen, die sich in einer zylindrischen Siebfläche bewegt. Entsprechende Schneckenwellen kommen wiederum in den oben genannten Entwässerungsvorrichtungen zum Einsatz, bei dem ein Schlamm mit Hilfe der Schneckenwelle entlang einer zylindrischen und die Schneckenwelle umgebende Siebfläche bewegt, hierbei gepresst und dadurch entwässert wird.

Nachteilig beim bekannten Stand der Technik ist die Tatsache, dass der Abstand zwischen der Siebfläche und der der Siebfläche gegenüberliegenden und die Abstreiferprofile tragenden Bereiche der Schneckenwelle nicht immer konstant sind (beispielsweise, weil die Siebfläche eine geringe Unwucht aufweist). Hierdurch kommt es zu lokalen Belastungen der Abstreiferprofile bzw. einem stellenweisen Abstand zwischen der Siebfläche und den benachbarten Abstreiferprofile. Dies hat wiederum zur Folge, dass die Abstreiferprofile entweder zu stark abgenutzt werden, oder dass die Entwässerung des zu entwässernden Schlamms unbefriedigend erfolgt.

Aufgabe der vorliegenden Erfindung ist es daher, ein Abstreiferprofil sowie eine Entwässerungsvorrichtung mit einem oder mehreren Abstreiferprofilen vorzuschlagen, die sich in obigem Punkt in vorteilhafter Weise vom bekannten Stand der Technik unterscheiden.

Die Aufgabe wird gelöst durch ein Abstreiferprofil sowie eine Entwässerungsvorrichtung mit den Merkmalen der unabhängigen Patentansprüche.

Erfindungsgemäß zeichnet sich das Abstreiferprofil nun dadurch aus, dass es neben einem Lippenabschnitt (der beispielsweise in einem in die genannte Entwässerungsvorrichtung eingebautem Zustand dem Abstreifen von Schlammbestandteilen von einer Siebfläche dient) und einem Befestigungsabschnitt (der der Fixierung des Abstreiferprofils mit Hilfe einer Halteanordnung, beispielsweise einer Halteanordnung der Entwässerungsvorrichtung, dient) einen den Lippenabschnitt und den Befestigungsabschnitt verbindenden Zwischenabschnitt aufweist, wobei der Zwischenabschnitt in einer senkrecht zur Längsausdehnung des Abstreiferprofil verlaufenden Richtung federnd ausgebildet ist, so dass der Lippenabschnitt in Richtung des Befestigungsabschnitts bewegbar ist.

Im Gegensatz zum Stand der Technik ist der Abstand zwischen dem Lippenabschnitt und dem Befestigungsabschnitt somit nicht mehr starr. Vielmehr erlaubt der federnde Zwischenabschnitt eine Relativbewegung zwischen Lippenabschnitt und Befestigungsabschnitt, so dass der Lippenabschnitt auch bei Anlage an einer unebenen bzw. eine Unwucht aufweisenden Fläche (z. B. in Form einer Siebfläche) stets an der entsprechenden Fläche anliegt und damit die gewünschte Bewegung des zu entwässernden Schlamms bzw. des jeweils abzustreifenden Mediums sicherstellt. Zudem ist die mechanische Belastung des Abstreiferprofils durch den flexibel gestalteten Zwischenabschnitt verhältnismäßig gering, da Unebenheiten nicht zu einer Beschädigung des Lippenabschnitts, sondern lediglich zu einem reversiblen Verformen des Zwischenabschnitts führen.

Der Lippenabschnitt und der Befestigungsabschnitt weisen im Gegensatz zum Zwischenabschnitt eine relativ hohe Festigkeit bzw. Steifheit auf, so dass eine Krafteinwirkung (bis zu einem gewissen Betrag) ausschließlich zu einer Verformung des Zwischenabschnitts, nicht aber des Lippen- bzw. Befestigungsabschnitts führt. Hierfür weist das Abstreiferprofil vorzugsweise eine Querschnittsform auf, die in Richtung der Längsausdehnung des Abstreiferprofils stets konstant ist. Zudem sollte die Flexibilität der genannten Abschnitte ausreichend hoch sein, um das Abstreiferprofil von einer geradlinigen Grundform in eine gebogene, insbesondere spiralförmige, Form biegen und in diesem Zustand auf eine Schneckenwelle montieren zu können.

Ferner sollte das Abstreiferprofil, bzw. zumindest dessen Lippenabschnitt, aus einem Material bestehen, das mikroben- und hydrolysebeständig ist, um eine Beschädigung beim Kontakt mit unterschiedlichen Substanzen, beispielsweise in Form von Schlämmen, zu verhindern. Vorzugsweise kommt das erfindungsgemäße Abstreiferprofil bei Anlagen zum Einsatz, die der Entwässerung von Schlämmen dient, welche bei der Reinigung von, beispielsweise kommunalen, Abwässern anfallen. Denkbar ist der Einsatz des Abstreiferprofils jedoch auch in anderen Anlagen, die z. B. der Behandlung von Abwässern oder Schlämmen dienen. Beispielhaft seien an dieser Stelle aus dem Stand der Technik bekannte Abwasserrechen, Siebanlagen oder Förderschnecken genannt. Ebenso kann das Abstreiferprofil bei Förder- oder Siebbändern oder sonstigen Vorrichtungen zum Einsatz kommen, bei denen ein Abstreifen von Verunreinigungen oder sonstigen Substanzen von einer an dem Abstreiferprofil anliegenden Fläche gewünscht ist.

Um die genannte federnde Bewegung des Lippenabschnitts zu ermöglichen, ist es von Vorteil, wenn der Zwischenabschnitt in einem senkrecht zur genannten Längsausdehnung verlaufenden Querschnitt einen zumindest abschnittsweise gebogenen Verlauf aufweist. Der Zwischenabschnitt kann beispielsweise C-förmig ausgebildet sein, wobei ein Ende der C-Form mit dem Lippenabschnitt und das andere Ende mit dem Befestigungsabschnitt in Verbindung steht bzw. in die genannten Abschnitte übergeht. Der Bauchabschnitt der C-Form liegt schließlich zwischen Lippen- und Befestigungsabschnitt und wird bei einer Bewegung des Lippenabschnitts in Richtung des Befestigungsabschnitts gestaucht, um die erfindungsgemäße Relativbewegung zwischen den zuletzt genannten Abschnitten zu ermöglichen.

Erfindungsgemäß ist vorgesehen, dass der Zwischenabschnitt in einem senkrecht zu seiner Längsausdehnung verlaufenden Querschnitt zumindest abschnittsweise eine geringere Breite aufweist als der Lippen- und der Befestigungsabschnitt. In diesem Fall kann die gewünschte Relativbewegung auch dann erfolgen, wenn die Biegesteifigkeit aller Abschnitte gleich hoch ist.

Auch ist es äußert vorteilhaft, wenn der Zwischenabschnitt in einem senkrecht zur genannten Längsausdehnung verlaufenden Querschnitt einen zumindest abschnittsweise ein- oder mehrfach geknickten Verlauf aufweist. Insbesondere ist es von Vorteil, wenn der Zwischenabschnitt in dem genannten Querschnitt zwei Bereiche aufweist, die in einem Winkel zwischen 20° und 70° zueinander verlaufen, wobei ein erster Bereich in den Lippenabschnitt und ein zweiter Bereich in den Befestigungsabschnitt übergehen.

Vorteile bringt es zudem mit sich, wenn der Lippenabschnitt, der Befestigungsabschnitt und der Zwischenabschnitt einteilig ausgebildet sind. Beispielsweise könnte das Abstreiferprofil einen gleichbleibenden Querschnitt aufweisen und durch Gießen, Spritzgießen oder ein anderes Formverfahren hergestellt sein. Besondere Vorteile bringt es in diesem Zusammenhang mit sich, wenn das Abstreiferprofil als Strangpressprofil vorliegt, so dass die Herstellung einfach und kostengünstig erfolgen kann.

Des Weiteren ist es vorteilhaft, wenn der Lippenabschnitt und/oder der Befestigungsabschnitt und/oder der Zwischenabschnitt zumindest größtenteils aus einem Kunststoff bestehen, dessen Shore-Härte zwischen 60 Shore A und 100 Shore A, bevorzugt zwischen 65 Shore A und 90 Shore A, beträgt. Eine Härte in dem genannten Bereich stellt eine geringe Biegsamkeit der Lippen- und Befestigungsabschnitte sicher. Ist die sich in einem senkrecht zur Längsausdehnung verlaufenden Querschnitt erstreckende Breite des Zwischenabschnitts geringer als die Breite des Lippen- und/oder Befestigungsabschnitts, so kann der Zwischenabschnitt dieselbe Härte aufweisen wie die restlichen Abschnitte, wobei dennoch eine Bewegung des Lippenabschnitts in Richtung des Befestigungsabschnitts möglich ist.

Erfindungsgemäß ist ferner vorgesehen, dass das Abstreiferprofil eine Längsausdehnung aufweist, deren Betrag wenigstens 1 m beträgt. Bevorzugt beträgt der genannte Betrag wenigstens 2 m, besonders bevorzugt wenigstens 5 m. Das Abstreiferprofil kann in diesem Fall als Meterware produziert und während dem Einbau in eine entsprechende Entwässerungsvorrichtung auf die gewünschte Länge gekürzt werden. Bevorzugt weist das Abstreiferprofil zudem eine senkrecht zur Längsausdehnung verlaufende und vom Befestigungsabschnitt in Richtung des Lippenabschnitts weisende Höhe auf, deren Betrag zwischen 10 mm und 60 mm, bevorzugt zwischen 15 mm und 50 mm, beträgt. Schließlich ist es vorteilhaft, wenn das Abstreiferprofil eine senkrecht zur Längsausdehnung des Abstreiferprofils und senkrecht zur genannten Höhe verlaufende Breite aufweist, deren Betrag zwischen 4 mm und 16 mm, bevorzugt zwischen 6 mm und 14 mm, beträgt.

Vorteilhaft ist es, wenn der Befestigungsabschnitt eine sich in Richtung der Längsausdehnung des Abstreiferprofils erstreckende Verstärkung aufweist, die in einer Ausnehmung oder einer Vertiefung des Befestigungsabschnitts angeordnet ist. Die Verstärkung sollte hierbei eine höhere Härte aufweisen als der Befestigungsabschnitt. In jedem Fall erlaubt die Verstärkung eine Befestigung des Befestigungsabschnitts über ein von außen auf den Befestigungsabschnitt einwirkendes Befestigungselement. Beispielsweise wäre es denkbar, das Abstreiferprofil in eine umlaufende Nut einer Schneckenwelle einzusetzen und anschließend mit Hilfe von mehreren in Richtung der Längsausdehnung des Abstreiferprofils verteilt angeordneten (Maden-)Schrauben zu fixieren, wobei die Schrauben zwischen der Verstärkung und dem Zwischenabschnitt mit dem Befestigungsabschnitt in Verbindung stehen und das Abstreiferprofil in Richtung des Nutgrundes pressen. In jedem Fall sollte sich die fixieren, wobei die Schrauben zwischen der Verstärkung und dem Zwischenabschnitt mit dem Befestigungsabschnitt in Verbindung stehen und das Abstreiferprofil in Richtung des Nutgrundes pressen. In jedem Fall sollte sich die Verstärkung durchgängig in Richtung der Längsausdehnung des Abstreiferprofils erstrecken, um die Gesamtsteifigkeit des Abstreiferprofils zu erhöhen.

Besonders vorteilhaft ist es, wenn die Verstärkung durch ein sich in Richtung der Längsausdehnung des Abstreiferprofils erstreckendes Metall- oder Kunststoffprofil, beispielsweise ein Drahtseil, gebildet ist. Das Drahtseil besitzt vorzugsweise eine Dicke zwischen 1 mm und 5 mm, um trotz hoher Festigkeit ein Biegen des Abstreiferprofils in einer senkrecht zu seiner Längsausdehnung verlaufenden Richtung zu ermöglichen.

Vorteilhaft ist es, wenn die Verstärkung zumindest umfangsseitig in den Befestigungsabschnitt eingebettet ist. Hingegen ist es denkbar, dass die Verstärkung in den beiden Stirnseiten des Abstreiferprofils von außen sichtbar ist, wobei dieser Fall insbesondere dann eintreten wird, wenn es sich bei dem Abstreiferprofil um einen abgelängten Abschnitt eines Endlos(strangpress)profils handelt.

Die erfindungsgemäße Entwässerungsvorrichtung besitzt schließlich wenigstens ein Abstreiferprofil gemäß bisheriger bzw. nachfolgender Beschreibung, wobei die jeweiligen Merkmale einzeln oder in beliebiger Kombination verwirklicht sein können, solange das Abstreiferprofil einen den Lippenabschnitt und den Befestigungsabschnitt verbindenden Zwischenabschnitt aufweist und der Zwischenabschnitt in einer senkrecht zur Längsausdehnung verlaufenden Richtung federnd ausgebildet ist, so dass der Lippenabschnitt in Richtung des Befestigungsabschnitts bewegbar ist.

Vorteilhaft ist es zudem, wenn das Abstreiferprofil mit Hilfe von Befestigungselementen fixiert ist, wobei die Befestigungselemente das Abstreiferprofil im Bereich seines Befestigungsabschnitts form- und/oder kraftschlüssig fixieren. Als Befestigungselemente können beispielsweise Schrauben, insbesondere Madenschrauben (Schrauben ohne Kopf), zum Einsatz kommen, die das Abstreiferprofil im Bereich seines Befestigungsabschnitts klemmend gegenüber einer Halteanordnung der Schneckenwelle fixieren.

Ebenso ist es vorteilhaft, wenn die Schneckenwelle eine umfangsseitig verlaufende Vertiefung, insbesondere in Form einer Nut, aufweist, wobei der Befestigungsabschnitt und der Zwischenabschnitt des Abstreiferprofils innerhalb der Vertiefung verlaufen, und wobei der Lippenabschnitt zumindest teilweise aus der Vertiefung hervorsteht und an der Siebfläche anliegt. Während der Befestigungs- und der Zwischenabschnitt innerhalb der Vertiefung geschützt sind, liegt der Lippenabschnitt an der Siebfläche an und stellt hierbei die gewünschte Bewegung des Schlamms entlang der Siebfläche sicher.

Weitere Vorteile der Erfindung sind in den nachfolgenden Ausführungsbeispielen beschrieben. Es zeigen, jeweils schematisch:
- **Figur 1**: eine Seitenansicht einer Entwässerungsvorrichtung ohne Schlamm,
- **Figur 2**: die Entwässerungsvorrichtung gemäß Figur 1 während ihres Betriebs,
- **Figur 3**: einen Ausschnitt einer Schneckenwelle einer Entwässerungsvorrichtung,
- **Figur 4**: einen Querschnitt zweier Abstreiferprofile (links: unbelastet; rechts: gestaucht aufgrund einer äußeren Belastung),
- **Figur 5**: einen Querschnitt eines weiteren Abstreiferprofils, und
- **Figur 6**: einen Querschnitt eines weiteren Abstreiferprofils (links: ohne Halteanordnung und ohne Verstärkung; rechts: mit Verstärkung und befestigt in einer Halteanordnung).

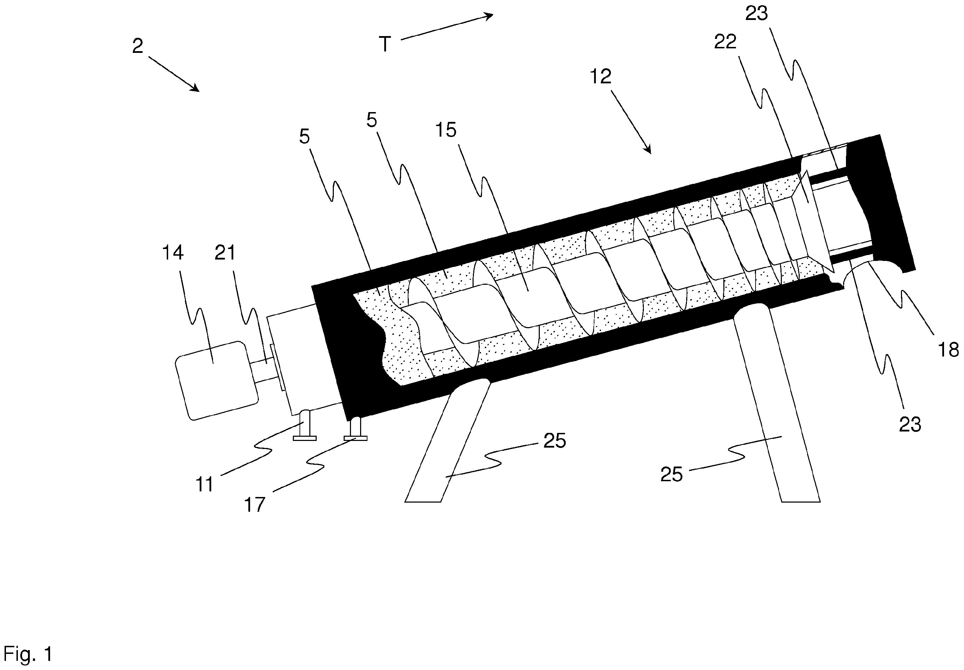

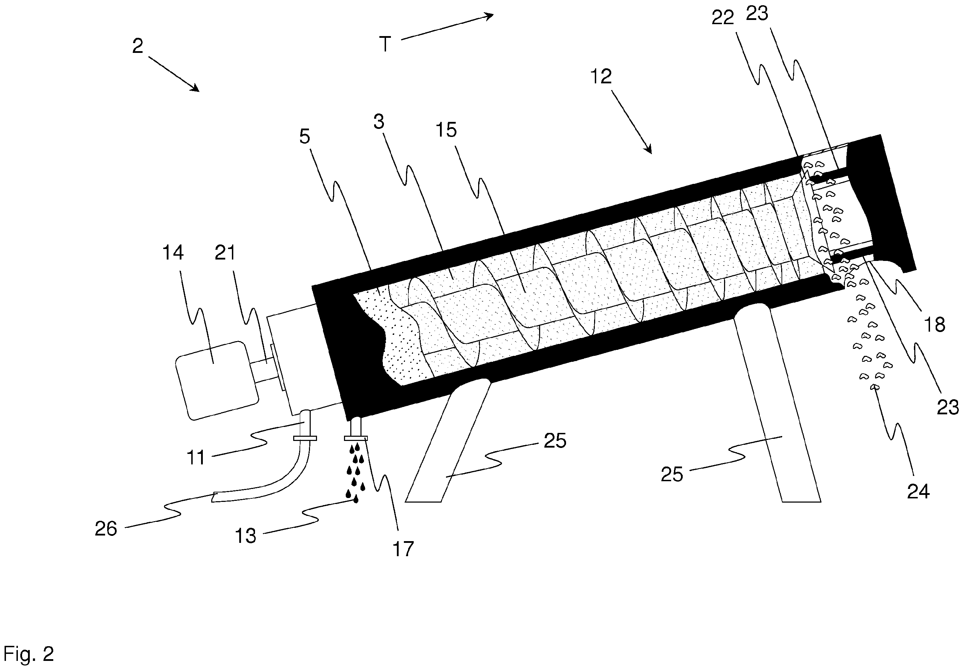

Die Figuren 1 und 2 zeigen eine Entwässerungsvorrichtung 2 zum Entwässern von Schlamm 3, wobei die Entwässerungsvorrichtung 2 aus Übersichtsgründen in leerem Zustand (Figur 1) und in einem Betriebszustand (Figur 2) gezeigt ist, in dem sie von zu entwässertem Schlamm 3 passiert wird.

Die beispielsweise über ein Gestell 25 gelagerte Entwässerungsvorrichtung 2 besitzt prinzipiell eine Einlassöffnung 11 für den zu entwässernden Schlamm 3 (die beispielsweise mit einem Schlauch 26 verbunden sein kann, über den der Schlamm 3 zugeführt wird). Im Anschluss an die Einlassöffnung 11 erstreckt sich eine Pressanordnung 12, die von dem Schlamm 3 in einer Transportrichtung T passiert wird und die beispielsweise, wie in den Figuren 1 und 2 gezeigt, eine Schneckenwelle 15 und eine die Schneckenwelle 15 umgebende Siebfläche 5 umfassen kann (die prinzipiell zylindrische Siebfläche 5 ist in den Figuren nur teilweise gezeigt, um einen Blick ins Innere der Pressanordnung 12 zu ermöglichen).

Durch die sich ändernde, vorzugsweise abnehmende, Steigung der Schneckenwelle 15 und/oder deren sich in Richtung einer Austrittsöffnung 18 eventuell ändernden, vorzugsweise vergrößernden, Außendurchmesser wird der Schlamm 3 gepresst, wobei es zum Austritt von Flüssigkeit 13 durch die Siebfläche 5 kommt. Zur Unterstützung des Pressvorgangs besitzt die Entwässerungsvorrichtung 2 vorzugsweise eine Gegenfläche, beispielsweise in Form des gezeigten Presskonus 22. Der Presskonus 22 befindet sich hierbei im oberen Endbereich der Schneckenwelle 15 und bildet mit einer korrespondierenden Außenwandung einen ringförmigen Spalt, der von dem entwässerten Schlamm 3 passiert werden kann. Durch die Verstellung des Presskonus 22 in Axialrichtung der über einen Antrieb 14 angetriebenen Drehachse 21 der Schneckenwelle 15 kann schließlich der genannte Spalt verändert und damit der Gegendruck während des Pressvorgangs angepasst werden (hierfür sind beispielsweise eine oder mehrere, beispielsweise pneumatisch betätigbare, Verstellelemente 23 vorhanden).

Die Flüssigkeit 13 wird schließlich während des Pressvorgangs zwischen der Siebfläche 5 und einem entsprechenden Außenmantel der Entwässerungsvorrichtung 2 nach unten in Richtung einer Auslassöffnung 17 geführt. Dort kann sie z. B. mit Hilfe einer nicht gezeigten Schlauchanordnung abgeführt oder mit Hilfe einer Auffangvorrichtung aufgefangen werden.

Im Gegenzug erreicht der Schlamm 3 nach Passieren der bzw. eines Großteils der Pressanordnung 12 die genannte Austrittsöffnung 18. Die von der Siebfläche 5 zurückgehaltenen Schlammbestandteile 24 können schließlich aufgefangen oder mit einer Fördervorrichtung einem weiteren Prozess zugeführt werden.

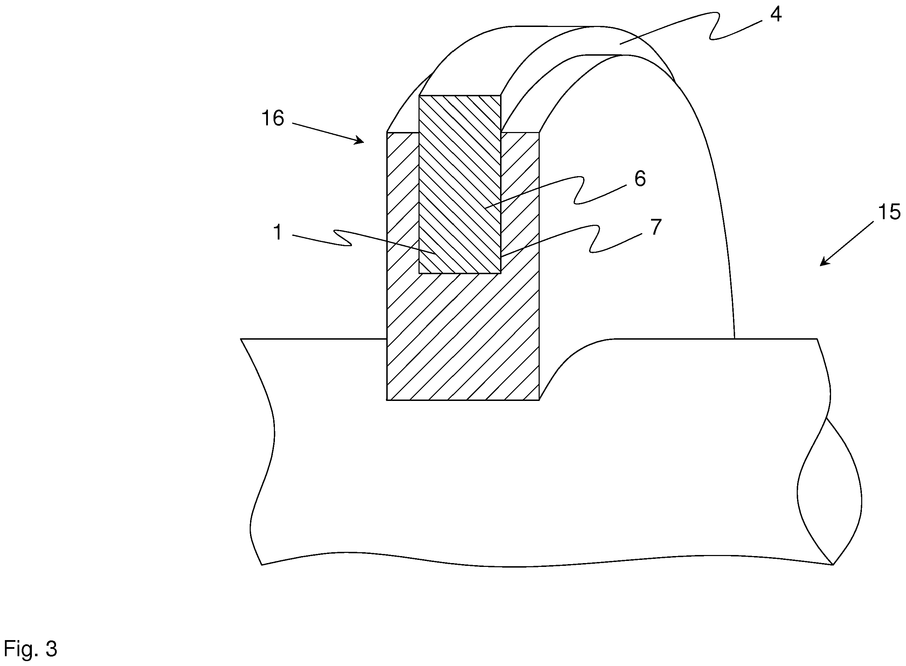

Um nun sicherzustellen, dass der Schlamm 3 von der Schneckenwelle 15 zuverlässig in den Bereich der Austrittsöffnung 18 transportiert und hierbei entwässert wird, ist es bekannt, die Schneckenwelle 15 in ihrem der Siebfläche 5 benachbarten Außenbereich 16 mit einem Abstreiferprofil 1 zu versehen. Einen Ausschnitt einer entsprechenden Schneckenwelle 15 zeigt Figur 3, wobei das Abstreiferprofil 1 einen Befestigungsabschnitt 6 besitzt, über den es in einer, beispielsweise nutförmigen, Halteanordnung 7 gehalten wird. Ferner ist ein Lippenabschnitt 4 vorhanden, der sich nach außerhalb der Halteanordnung 7 erstreckt und der im Betrieb der Entwässerungsvorrichtung 2 mit der Siebfläche 5 in Kontakt steht.

Nachteilig bei der in Figur 3 gezeigten Lösung ist die Tatsache, dass der Lippenabschnitt 4 teilweise einer hohen in Richtung des Befestigungsabschnitts 6 wirkenden Kraft ausgesetzt ist, wenn die Form der Siebfläche 5, bedingt durch geringe Unwuchten, abschnittsweise von der der Form eines Zylinders abweicht.

Um diesem Nachteil zu begegnen, wird nun erfindungsgemäß vorgeschlagen, dass das Abstreiferprofil 1 einen zwischen dem Befestigungsabschnitt 6 und dem Lippenabschnitt 4 angeordneten Zwischenabschnitt 8 aufweist, der derart geformt ist, dass er eine Relativbewegung zwischen dem Lippenabschnitt 4 und dem Befestigungsabschnitt 6 erlaubt.

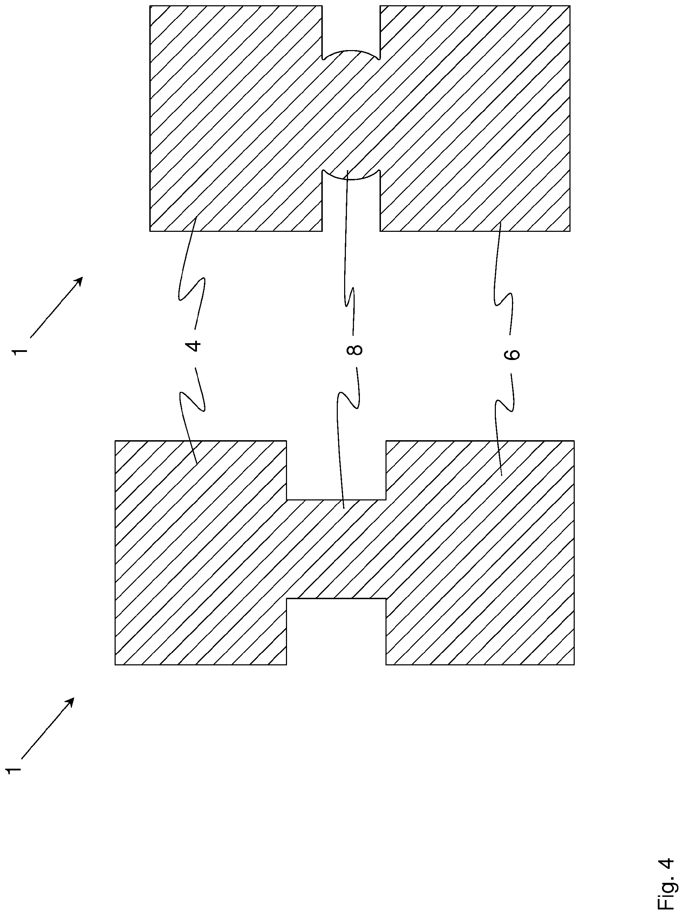

Eine mögliche Gestaltung des Zwischenabschnitts 8 ist Figur 4 zu entnehmen, die einen senkrecht zur Längsausdehnung L des Abstreiferprofils 1 verlaufenden Querschnitt zeigt. Der Zwischenabschnitt 8 zeichnet sich in diesem Fall dadurch aus, dass seine parallel zur Blattebene verlaufende Breite geringer ist als die Breite der restlichen beiden Abschnitte. Hierdurch kann der Zwischenabschnitt 8 in Richtung der Höhe H des Abstreiferprofils 1 gestaucht werden (linke Abbildung in Figur 4: ungestaucht; rechte Abbildung: gestaucht), so dass Unwuchten der Siebfläche 5 ausgeglichen werden können (die Längsausdehnung L des Abstreiferprofils 1 erstreckt sich im Übrigen senkrecht zur Blattebene). Selbstverständlich kann auch das in Figur 4 gezeigte Abstreiferprofil 1 im Zusammenhang mit der bereits beschriebenen Schneckenwelle 15 zum Einsatz kommen und hierbei von einer entsprechenden Halteanordnung 7 fixiert sein (dies gilt auch für die im Folgenden noch näher beschriebenen Ausführungsbeispiele).

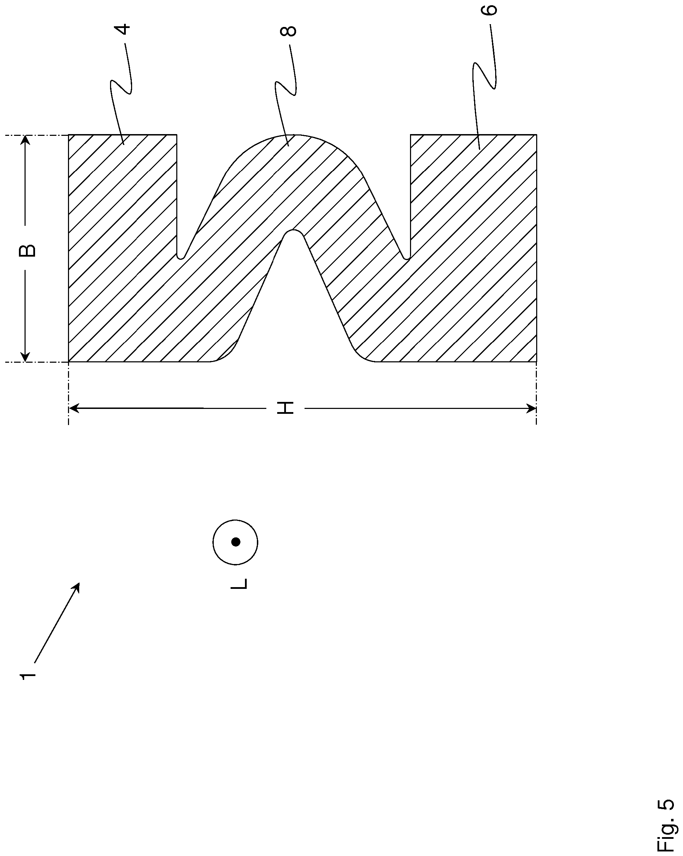

Eine besonders vorteilhafte Ausführungsform zeigt Figur 5 (in der, stellvertretend für die restlichen Ausführungsformen auch die Breite B, Höhe H und senkrecht zur Blattebene verlaufende Längsausdehnung L des Abstreiferprofils 1 kenntlich gemacht sind). Der Zwischenabschnitt 8 besteht in diesem Fall aus zwei Abschnitten, die einen geknickten Gesamtverlauf aufweisen. Wirkt nun eine in Richtung des Befestigungsabschnitts 6 wirkende Kraft auf den Lippenabschnitt 4 ein, so kann der Zwischenabschnitt 8 ohne nennenswerte Stauchung einfedern, so dass der Lippenabschnitt 4 ohne übermäßige mechanische Belastung immer sauber an der Siebfläche 5 anliegen kann.

Im Übrigen sei an dieser Stelle darauf hingewiesen, dass die Außenkontur der Abstreiferprofile 1 in Richtung ihrer Längsausdehnung L gleichbleibend sein sollte.

Eine letzte Ausführungsform eines entsprechenden Abstreiferprofils 1 zeigt Figur 5, wobei das in der linken Abbildung gezeigte Abstreiferprofil 1 in der rechten Abbildung in einer Halteanordnung 7 einer Schneckenwelle 15 fixiert ist.

Das Abstreiferprofil 1 besitzt auch in dem in Figur 5 gezeigten Fall ein Zwischenelement, das eine Relativbewegung zwischen dem Lippenabschnitt 4 und dem Befestigungsabschnitt 6 ermöglicht, wobei der Zwischenabschnitt 8 in dem gezeigten Querschnitt zumindest abschnittsweise C-förmig geformt ist.

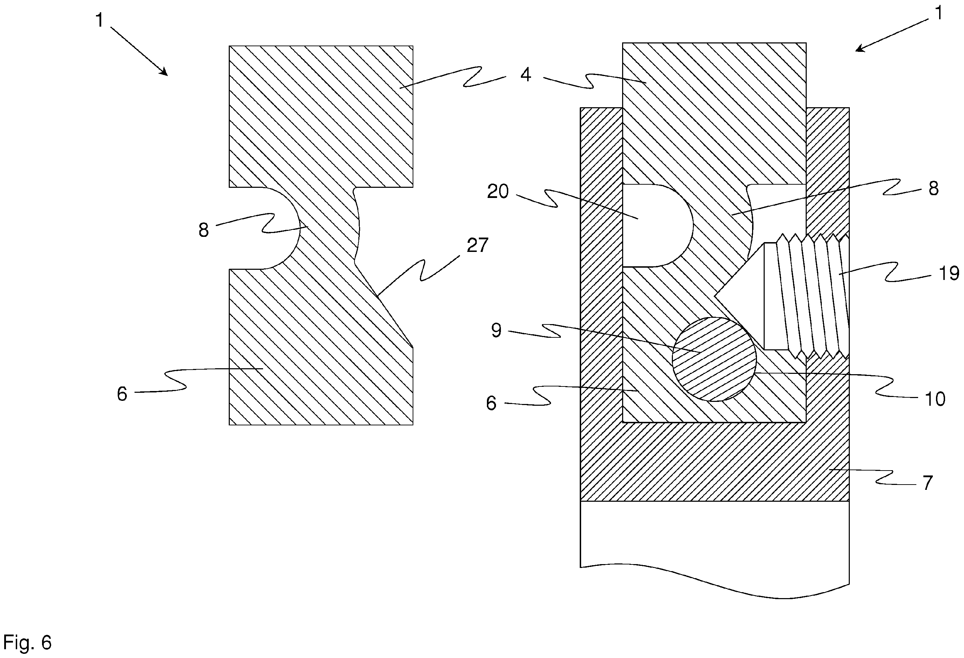

Schließlich kann das Abstreiferprofil 1 grundsätzlich (d. h. unabhängig von seinem genauen Querschnitt bzw. der Form seines Zwischenabschnitts 8) eine in einer Ausnehmung 10 angeordnete Verstärkung 9 aufweisen, wie sie in der rechten Abbildung von Figur 6 gezeigt ist. Die Verstärkung 9 kann beispielsweise als Drahtseil oder sonstiges strangförmiges Element vorliegen, das vorzugsweise umfangsseitig vollständig in den Befestigungsabschnitt 6 eingebettet ist. Wird nun das Abstreiferprofil 1 mit Hilfe von Befestigungselementen 19, beispielsweise der in Figur 6 gezeigten Madenschrauben gegenüber einer entsprechenden Halteanordnung 7 (die vorzugsweise nutförmig ausgebildet ist und die in Figur 6 gezeigte Vertiefung 20 aufweist) fixiert, so kann die Verstärkung 9 in die dem Lippenabschnitt 4 abgewandte Richtung gepresst werden. Hierdurch erfolgt schließlich eine sichere Befestigung des Abstreiferprofils 1 die ein Verrutschen des Abstreiferprofils 1 gegenüber der Halteanordnung 7 verhindert.

Um die Montage des Abstreiferprofils 1 zu vereinfachen, ist es schließlich von Vorteil, wenn der dem Befestigungselement 19 zugewandte Bereich des Befestigungsabschnitts 6 eine in Figur 6 (rechte Abbildung) gezeigte Abflachung 27 besitzt.

Die vorliegende Erfindung ist nicht auf die dargestellten und beschriebenen Ausführungsbeispiele beschränkt. Abwandlungen im Rahmen der Patentansprüche sind ebenso möglich wie eine beliebige Kombination der beschriebenen Merkmale, auch wenn sie in unterschiedlichen Teilen der Beschreibung bzw. den Ansprüchen oder in unterschiedlichen Ausführungsbeispielen dargestellt und beschrieben sind.

Die Erfindung wird von den Ansprüchen definiert.

### Bezugszeichenliste

- 1: Abstreiferprofil
- 2: Entwässerungsvorrichtung
- 3: Schlamm
- 4: Lippenabschnitt
- 5: Siebfläche
- 6: Befestigungsabschnitt
- 7: Halteanordnung
- 8: Zwischenabschnitt
- 9: Verstärkung
- 10: Ausnehmung
- 11: Einlassöffnung
- 12: Pressanordnung
- 13: Flüssigkeit
- 14: Antrieb
- 15: Schneckenwelle
- 16: Außenbereich
- 17: Auslassöffnung
- 18: Austrittsöffnung
- 19: Befestigungselement
- 20: Vertiefung
- 21: Drehachse
- 22: Presskonus
- 23: Verstellelement
- 24: von der Siebfläche zurückgehaltene Schlammbestandteile
- 25: Gestell
- 26: Schlauch
- 27: Abflachung

- B: Breite
- H: Höhe
- L: Längsausdehnung des Abstreiferprofils
- T: Transportrichtung

## Patentansprüche

1. Längliches Abstreiferprofil (1) für eine Entwässerungsvorrichtung (2), die dem Entwässern von Schlamm (3) dient,
- wobei das Abstreiferprofil (1) einen sich in Richtung der Längsausdehnung (L) des Abstreiferprofils (1) erstreckenden Lippenabschnitt (4) aufweist, der in einem in die Entwässerungsvorrichtung (2) eingebautem Zustand dem Abstreifen von Schlammbestandteilen von einer Siebfläche (5) dient, und
- wobei das Abstreiferprofil (1) einen sich in Richtung der genannten Längsausdehnung (L) erstreckenden Befestigungsabschnitt (6) aufweist, der der Fixierung des Abstreiferprofils (1) mit Hilfe einer Halteanordnung (7) dient,
**dadurch gekennzeichnet,**
**dass** die Längsausdehnung (L) des Abstreiferprofils (1) einen Betrag von wenigstens 1 m aufweist, wobei das Abstreiferprofil (1) darüber hinaus einen den Lippenabschnitt (4) und den Befestigungsabschnitt (6) verbindenden Zwischenabschnitt (8) aufweist, der in einem senkrecht zu seiner Längsausdehnung verlaufenden Querschnitt zumindest abschnittsweise eine geringere Breite (B) aufweist als der Lippenabschnitt (4) und der Befestigungsabschnitt (6), und wobei der Zwischenabschnitt (8) in einer senkrecht zur Längsausdehnung (L) verlaufenden Richtung federnd ausgebildet ist, so dass der Lippenabschnitt (4) in Richtung des Befestigungsabschnitts (6) bewegbar ist.

2. Abstreiferprofil gemäß dem vorangegangenen Anspruch, **dadurch gekennzeichnet, dass** der Zwischenabschnitt (8) in einem senkrecht zur genannten Längsausdehnung (L) verlaufenden Querschnitt einen zumindest abschnittsweise gebogenen Verlauf aufweist.

3. Abstreiferprofil gemäß einem der vorangegangenen Ansprüche, **dadurch gekennzeichnet, dass** der Zwischenabschnitt (8) in einem senkrecht zur genannten Längsausdehnung (L) verlaufenden Querschnitt einen zumindest abschnittsweise ein- oder mehrfach geknickten Verlauf aufweist.

4. Abstreiferprofil gemäß einem der vorangegangenen Ansprüche, **dadurch gekennzeichnet, dass** der Lippenabschnitt (4), der Befestigungsabschnitt (6) und der Zwischenabschnitt (8) einteilig ausgebildet sind.

5. Abstreiferprofil gemäß einem der vorangegangenen Ansprüche, **dadurch gekennzeichnet, dass** das Abstreiferprofil (1) als Strangpressprofil vorliegt.

6. Abstreiferprofil gemäß einem der vorangegangenen Ansprüche, **dadurch gekennzeichnet, dass** der Lippenabschnitt (4) und/oder der Befestigungsabschnitt (6) und/oder der Zwischenabschnitt (8) zumindest größtenteils aus einem Kunststoff bestehen, dessen Shore-Härte zwischen 60 Shore A und 100 Shore A, bevorzugt zwischen 65 Shore A und 90 Shore A, beträgt.

7. Abstreiferprofil gemäß einem der vorangegangenen Ansprüche, **dadurch gekennzeichnet, dass** das Abstreiferprofil (1) eine Längsausdehnung (L) aufweist, deren Betrag wenigstens 2 m, besonders bevorzugt wenigstens 5 m, beträgt, und/oder dass das Abstreiferprofil (1) eine senkrecht zur Längsausdehnung (L) verlaufende und vom Befestigungsabschnitt (6) in Richtung des Lippenabschnitts (4) weisende Höhe (H) aufweist, deren Betrag zwischen 10 mm und 60 mm, bevorzugt zwischen 15 mm und 50 mm, beträgt, und/oder dass das Abstreiferprofil (1) eine senkrecht zur Längsausdehnung (L) des Abstreiferprofils (1) und senkrecht zur genannten Höhe (H) verlaufende Breite (B) aufweist, deren Betrag zwischen 4 mm und 16 mm, bevorzugt zwischen 6 mm und 14 mm, beträgt.

8. Abstreiferprofil gemäß einem der vorangegangenen Ansprüche, **dadurch gekennzeichnet, dass** der Befestigungsabschnitt (6) eine sich in Richtung der Längsausdehnung (L) des Abstreiferprofils (1) erstreckende Verstärkung (9) aufweist, die in einer Ausnehmung (10) oder einer Vertiefung des Befestigungsabschnitts (6) angeordnet ist.

9. Abstreiferprofil gemäß dem vorangegangenen Anspruch, **dadurch gekennzeichnet, dass** die Verstärkung (9) durch ein sich in Richtung der Längsausdehnung (L) des Abstreiferprofils (1) erstreckendes Metall- oder Kunststoffprofil, beispielsweise ein Drahtseil, gebildet ist.

10. Abstreiferprofil gemäß Anspruch 8 oder 9, **dadurch gekennzeichnet, dass** die Verstärkung (9) zumindest umfangsseitig in den Befestigungsabschnitt (6) eingebettet ist.

11. Entwässerungsvorrichtung zum Entwässern von Schlamm (3),
- wobei die Entwässerungsvorrichtung (2) wenigstens eine Einlassöffnung (11) für den Schlamm (3) aufweist,
- wobei die Entwässerungsvorrichtung (2) eine Pressanordnung (12) aufweist, mit deren Hilfe der Schlamm (3) nach Passieren der Einlassöffnung (11) einem Pressvorgang unterziehbar ist, bei dem in dem Schlamm (3) vorhandene Flüssigkeit (13) aus dem Schlamm (3) ausgetrieben wird,
- wobei die Pressanordnung (12) eine mit Hilfe eines Antriebs (14) in eine Drehbewegung versetzbare Schneckenwelle (15) und eine die Schneckenwelle (15) zumindest abschnittsweise umgebende Siebfläche (5) umfasst,
- wobei die Schneckenwelle (15) in ihrem der Siebfläche (5) zugewandten Außenbereich (16) wenigstens ein Abstreiferprofil (1) besitzt, über das die Schneckenwelle (15) an der Siebfläche (5) anliegt,
- wobei die Entwässerungsvorrichtung (2) zumindest eine Auslassöffnung (17) für die aus dem Schlamm (3) ausgetriebene Flüssigkeit (13) aufweist, und
- wobei die Entwässerungsvorrichtung (2) wenigstens eine Austrittsöffnung (18) für den mit Hilfe der Entwässerungsvorrichtung (2) zumindest teilweise entwässerten Schlamm (3) aufweist,
**dadurch gekennzeichnet, dass** das Abstreiferprofil (1) gemäß einem der vorangegangenen Ansprüche ausgebildet ist.

12. Entwässerungsvorrichtung gemäß dem vorangegangenen Anspruch, **dadurch gekennzeichnet, dass** das Abstreiferprofil (1) mit Hilfe von Befestigungselementen (19) fixiert ist, wobei die Befestigungselemente (19) das Abstreiferprofil (1) im Bereich seines Befestigungsabschnitts (6) form- und/oder kraftschlüssig fixieren.

13. Entwässerungsvorrichtung gemäß Anspruch 11 oder 12, **dadurch gekennzeichnet, dass** die Schneckenwelle (15) eine umfangsseitig verlaufende Vertiefung (20), insbesondere in Form einer Nut, aufweist, wobei der Befestigungsabschnitt (6) und der Zwischenabschnitt (8) des Abstreiferprofils (1) innerhalb der Vertiefung (20) verlaufen, und wobei der Lippenabschnitt (4) zumindest teilweise aus der Vertiefung (20) hervorsteht und an der Siebfläche (5) anliegt.

## Claims

1. Elongated scraper profile (1), for a dewatering device (2) that serves the purpose of dewatering sludge (3),
- whereas the scraper profile (1) features a lip section (4) extending in the direction of the longitudinal extension (L) of the scraper profile (1), which, for example in a state installed in the dewatering device (2), serves the purpose of scraping sludge components from a screen surface (5), and
- whereas the scraper profile (1) features a fastening section (6) extending in the direction of the specified longitudinal extension (L), which serves the purpose of fixing the scraper profile (1) with the assistance of a retainer assembly (7),
**characterized in that**
the scraper profile (1) features a longitudinal extension (L), the amount of which is at least 1 m, whereas the scraper profile (1) also features an intermediate section (8) connecting the lip section (4) and the fastening section (6), having in a cross-section extending perpendicularly to its longitudinal extent, at least in sections a smaller width (B) than the lip section (4) and the fastening section (6), and whereas the intermediate section (8) is resiliently formed in a direction running perpendicular to the longitudinal extension (L), such that the lip section (4) is moveable in the direction of the fastening section (6).

2. Scraper profile according to the preceding claim, **characterized in that** the intermediate section (8), in a cross-section running perpendicular to the said longitudinal extension (L), features a shape that is curved at least in sections.

3. Scraper profile according to one of the preceding claims, **characterized in that** in a cross-section running perpendicular to the longitudinal extension (L), the intermediate section (8) features, at least in sections, a shape that is bent once or multiple times.

4. Scraper profile according to one of the preceding claims,
**characterized in that** the lip section (4), the fastening section (6) and the intermediate section (8) are formed in one piece.

5. Scraper profile according to one of the preceding claims,
**characterized in that** the scraper profile (1) is present as an extruded profile.

6. Scraper profile according to one of the preceding claims,
**characterized in that** the lip section (4) and/or the fastening section (6) and/or the intermediate section (8) consists, at least for the most part, of a plastic, the Shore hardness of which amounts to between 60 Shore A and 100 Shore A, preferably between 65 Shore A and 90 Shore A.

7. Scraper profile according to one of the preceding claims,
**characterized in that** the scraper profile (1) features a longitudinal extension (L), the amount of which is at least 2 m, in particular preferably at least 5 m, and/or that the scraper profile (1) features a height (H) running perpendicular to the longitudinal extension (L) and pointing from the fastening section (6) in the direction of the lip section (4), the amount of which is between 10 mm and 60 mm, preferably between 15 mm and 50 mm, and/or that the scraper profile (1) features a width (B) running perpendicular to the longitudinal extension (L) of the scraper profile (1) and perpendicular to the said height (H), the amount of which is between 4 mm and 16 mm, preferably between 6 mm and 14 mm.

8. Scraper profile according to one of the preceding claims,
**characterized in that** the fastening section (6) features a reinforcement (9), which is arranged in a recess (10) or a cavity of the fastening section (6), extending in the direction of the longitudinal extension (L) of the scraper profile (1).

9. Scraper profile according to the preceding claim, **characterized in that** the reinforcement (9) is formed by a metal or plastic profile, for example a wire cable, extending in the direction of the longitudinal extension (L) of the scraper profile (1).

10. Scraper profile according to claim 8 or 9, **characterized in that** the reinforcement (9) is embedded in the fastening section (6), at least on the circumference.

11. Dewatering device for the dewatering of sludge (3),
- whereas the dewatering device (2) features at least one inlet opening (11) for the sludge (3),
- whereas the dewatering device (2) features a pressing assembly (12), with the assistance of which the sludge (3) is able to undergo a pressing process after passing the inlet opening (11), with which a liquid (13) present in the sludge (3) is driven out of the sludge (3),
- whereas the pressing assembly (12) comprises a worm shaft (15) that is movable in a rotary motion with the assistance of a drive (14) and a screen surface (5) surrounding the worm shaft (15) at least in sections,
- whereas the worm shaft (15) has, in its outer area (16) turned towards the screen surface (5), at least one scraper profile (1), through which the worm shaft (15) is in contact with the screen surface (5),
- whereas the dewatering device (2) features at least one outlet opening (17) for the liquid (13) driven out of the sludge (3), and
- whereas the dewatering device (2) features at least one discharge opening (18) for the sludge (3) at least partly dewatered with the assistance of the dewatering device (2),
**characterized in that** the scraper profile (1) is formed in accordance with one of the preceding claims.

12. Dewatering device according to the preceding claim, **characterized in that** the scraper profile (1) is fixed with the assistance of fastening elements (19), whereas the fastening elements (19) fix the scraper profile (1) in the area of its fastening section (6) in a positively-locking or force-fitting manner.

13. Dewatering device according to claim 11 or 12, **characterized in that** the worm shaft (15) features a cavity (20) running on the circumference, particularly in the form of a groove, whereas the fastening section (6) and the intermediate section (8) of the scraper profile (1) run within the cavity (20), and whereas the lip section (4), at least in part, protrudes from the cavity (20) and is in contact with the screen surface (5).

## Revendications

1. Profilé racleur (1) longitudinal pour un dispositif de déshydratation (2) qui sert à déshydrater des boues (3),
- dans lequel le profilé racleur (1) présente une section de lèvre (4) s'étendant dans la direction de l'étendue longitudinale (L) du profilé racleur (1), qui, dans un état incorporé dans le dispositif de déshydratation (2), sert à racler les composants de boue depuis une surface de criblage (5), et
- dans lequel le profilé racleur (1) comporte une section de fixation (6) s'étendant dans la direction de ladite étendue longitudinale (L), qui sert à fixer le profilé racleur (1) à l'aide d'un dispositif de support (7),
**caractérisé en ce que**
l'étendue longitudinale (L) du profilé racleur (1) a une valeur d'au moins 1 m, le profilé racleur (1) ayant en outre une section intermédiaire (8) reliant la section de lèvre (4) et la section de fixation (6), qui, dans une section transversale s'étendant perpendiculairement à son étendue longitudinale, présente au moins en certaines sections une largeur (B) plus petite que la section de lèvre (4) et la section de fixation (6), et dans lequel la section intermédiaire (8) se présente sous une forme faisant ressort dans une direction s'étendant perpendiculairement à l'étendue longitudinale (L), de sorte que la section de lèvre (4) soit mobile dans la direction de la section de fixation (6).

2. Profilé racleur selon la revendication précédente, **caractérisé en ce que**, dans une section transversale s'étendant perpendiculairement à ladite étendue longitudinale (L), la section intermédiaire (8) a une allure courbée au moins en certaines sections.

3. Profilé racleur selon l'une des revendications précédentes, **caractérisé en ce que**, dans une section transversale s'étendant perpendiculairement à ladite étendue longitudinale (L), la section intermédiaire (8) a une allure à un ou plusieurs coudes au moins en certaines sections.

4. Profilé racleur selon l'une des revendications précédentes, **caractérisé en ce que** la section de lèvre (4), la section de fixation (6) et la section intermédiaire (8) se présentent sous une forme monocorps.

5. Profilé racleur selon l'une des revendications précédentes, **caractérisé en ce que** le profilé racleur (1) est présent sous la forme d'un profilé filé.

6. Profilé racleur selon l'une des revendications précédentes, **caractérisé en ce que** la section de lèvre (4) et/ou la section de fixation (6) et/ou la section intermédiaire (8) sont constituées au moins en majeure partie d'une matière plastique dont la dureté Shore se situe entre 60 Shore A et 100 Shore A, de préférence entre 65 Shore A et 90 Shore A.

7. Profilé racleur selon l'une des revendications précédentes, **caractérisé en ce que** le profilé racleur (1) présente une étendue longitudinale (L) dont la valeur est d'au moins 2 m, de manière particulièrement préférée d'au moins 5 m, et/ou **en ce que** le profilé racleur (1) présente une hauteur (H) s'étendant perpendiculaire à l'étendue longitudinale (L) et dirigée depuis la section de fixation (6) dans la direction de la section de lèvre (4), dont la valeur est comprise entre 10 mm et 60 mm, de préférence entre 15 mm et 50 mm, et/ou **en ce que** le profilé racleur (1) a une largeur (B) s'étendant perpendiculairement à l'étendue longitudinale (L) du profilé racleur (1) et perpendiculairement à ladite hauteur (H), et dont la valeur est comprise entre 4 mm et 16 mm, de préférence entre 6 mm et 14 mm.

8. Profilé racleur selon l'une des revendications précédentes, **caractérisé en ce que** la section de fixation (6) comprend un gain (9) s'étendant dans la direction de l'étendue longitudinale (L) du profilé racleur (1), qui est disposé dans un évidement (10) ou un creux de la section de fixation (6).

9. Profilé racleur selon la revendication précédente, **caractérisé en ce que** le gain (9) est formé par un profilé de métal ou de matière plastique s'étendant dans la direction de l'étendue longitudinale (L) du profilé racleur (1), par exemple un câble métallique.

10. Profilé racleur selon la revendication 8 ou 9, **caractérisé en ce que** le gain (9) est incorporé dans la section de fixation (6) au moins sur son côté circonférentiel.

11. Dispositif de déshydratation pour déshydrater des boues (3),
- dans lequel le dispositif de déshydratation (2) comporte au moins une ouverture d'entrée (11) pour la boue (3),
- dans lequel le dispositif de déshydratation (2) comporte un agencement de pressage (12) à l'aide duquel la boue (3), après avoir traversé l'ouverture d'entrée (11), peut être soumise à une opération de pressage dans laquelle le liquide (13) présent dans la boue (3) est évacué de la boue (3),
- dans lequel l'agencement de pressage (12) comporte un arbre de vis sans fin (15) pouvant être mis en mouvement de rotation à l'aide d'un entraînement (14) et une surface de criblage (5) entourant l'arbre de vis sans fin (15) au moins en certaines de des sections,
- dans lequel l'arbre de vis sans fin (15), dans sa zone extérieure (16) tournée vers la surface de criblage (5), possède au moins un profilé racleur (1) par l'intermédiaire duquel l'arbre de vis sans fin (15) repose contre la surface de criblage (5),
- dans lequel le dispositif de déshydratation (2) présente au moins une ouverture de sortie (17) pour le liquide (13) évacué de la boue (3), et
- dans lequel le dispositif de déshydratation (2) comporte au moins une ouverture de sortie (18) pour la boue (3) au moins partiellement déshydratée à l'aide du dispositif de déshydratation (2),
**caractérisé en ce que** le profilé racleur (1) se présente sous une forme selon l'une des revendications précédentes.

12. Dispositif de déshydratation selon la revendication précédente, **caractérisé en ce que** le profilé racleur (1) est fixé à l'aide d'éléments de fixation (19), sachant que les éléments de fixation (19) fixent le profilé racleur (1) dans la zone de sa section de fixation (6) par complémentarité de formes et/ou de forces.

13. Dispositif de déshydratation selon la revendication 11 ou 12, **caractérisé en ce que** l'arbre de vis sans fin (15) présente un creux (20) s'étendant circonférentiellement, en particulier sous la forme d'une rainure, sachant que la section de fixation (6) et la section intermédiaire (8) du profilé racleur (1) s'étendent au sein du creux (20), et sachant que la section de lèvre (4) dépasse au moins partiellement du creux (20) et repose contre la surface de criblage (5).
